# EUROPÄISCHE PATENTSCHRIFT

(11) **EP 2 560 845 B1**
(45) Veröffentlichungstag und Bekanntmachung des Hinweises auf die Patenterteilung: **22.03.2017**
(21) Anmeldenummer: 11711288.8
(22) Anmeldetag: 29.03.2011
(51) Int. Cl.: B60W 50/00, B60R 25/00, B60W 10/06, B60W 10/08, B60W 20/00, B60R 25/04

(54) **VERFAHREN ZUM BETREIBEN VON ANTRIEBSSTEUERGERÄTEN IN EINEM KRAFTFAHRZEUG, SOWIE KRAFTFAHRZEUG**
METHOD FOR OPERATING DRIVE CONTROL UNITS IN A MOTOR VEHICLE, AND MOTOR VEHICLE
PROCÉDÉ POUR FAIRE FONCTIONNER DES APPAREILS DE COMMANDE DE PROPULSION DANS UN VÉHICULE À MOTEUR, ET VÉHICULE À MOTEUR CORRESPONDANT

(30) Priorität: 17.04.2010 DE 102010015314
(43) Veröffentlichungstag der Anmeldung: 27.02.2013
(73) Patentinhaber: Audi AG, 85045 Ingolstadt (DE)
(72) Erfinder: GRAF, Johann, 93345 Hausen (DE); STEINBRÜCK, Martin, 85080 Gaimersheim (DE)
(74) Vertreter: Brandt, Kai
(86) Internationale Anmeldenummer: PCT/EP2011/001561
(87) Internationale Veröffentlichungsnummer: WO 2011/128025

(56) Entgegenhaltungen:
- EP-A1- 2 058 197
- EP-A2- 1 512 591
- DE-A1- 19 954 757

## Beschreibung

Die Erfindung betrifft ein Verfahren zum Betreiben von Antriebssteuergeräten in einem Kraftfahrzeug nach dem Oberbegriff des Patentanspruchs 1 sowie ein Kraftfahrzeug nach dem Oberbegriff des Patentanspruchs 4.

Aufgabe der zu betreibenden Antriebssteuergeräte ist es, unterschiedliche Antriebe des Kraftfahrzeugs anzusteuern, indem jeweilige Steuersignale ausgegeben werden. Betreffend das erfindungsgemäße Kraftfahrzeug ist davon ausgegangen, dass es eine Verbrennungskraftmaschine als ersten Antrieb gibt mit einem zugehörigen ersten Antriebssteuergerät zum Senden von Steuersignalen an die Verbrennungskraftmaschine, und dass es einen elektrischen Antrieb als zweiten Antrieb gibt, mit einem zugehörigen zweiten Antriebssteuergerät zum Senden von Steuersignalen an den elektrischen Antrieb. Ein Steuergerät ist als Führungssteuergerät ausgelegt und empfängt Vorgaben betreffend ein von den Antrieben gemeinsam aufzubringendes Drehmoment, wobei es seine Aufgabe ist, diese Vorgaben zur Umsetzung zu bringen, indem Drehmoment den einzelnen Antrieben zugeteilt wird und entsprechende Anforderungssignale an zumindest eines dieser Antriebssteuergeräte gesendet werden.

Ein Verfahren zum Betreiben von Antriebssteuergeräten in einem Kraftfahrzeug ist aus dem gattungsbildenden Dokument EP 2 058 197 bekannt.

Es gibt nun in einem Kraftfahrzeug typischerweise auch ein Wegfahrsperrensteuergerät, dessen Aufgabe es ist, auf das Gegebensein einer vorbestimmten Bedingung zu überprüfen, bevor das Kraftfahrzeug losfahren kann. Die vorbestimmte Bedingung beinhaltet zum Beispiel, dass ein Kraftfahrzeugschlüssel eingesteckt und umgedreht ist oder eine bestimmte elektronische Kennung ausgelesen wird. Damit die einzelnen Steuergeräte keine Steuersignale abgeben können, ohne dass die vorbestimmte Bedingung erfüllt ist, sendet das Wegfahrsperrensteuergerät ein Freigabesignal an die Steuergeräte, typischerweise auf Anfrage hin. Vorliegend soll vorgesehen sein, dass zumindest das Führungssteuergerät und wenigstens ein vorbestimmtes Antriebssteuergerät, das von dem Führungssteuergerät verschieden ist, nur Steuersignale abgibt, wenn ihnen nach einer jeweiligen Anfrage von ihnen das Wegfahrsperrensteuergerät ein Freigabesignal übersandt hat.

Da das Führungssteuergerät ja die Vorgaben betreffend einen von den Antrieben gemeinsam aufzubringendes Drehmoment empfängt, ist das Führungssteuergerät typischerweise das erste Steuergerät, das eine Anfrage an das Wegfahrsperrensteuergerät sendet. Erhält das Führungssteuergerät die Freigabe, bedeutet dies noch nicht, dass das zumindest eine vorbestimmte weitere Antriebssteuergerät gleichermaßen ein Freigabesignal erhält. Daher passiert es, dass das Führungssteuergerät zunächst die Anfrage sendet, dann das Freigabesignal erhält, und dann Anforderungssignale an das zumindest eine vorbestimmte Antriebssteuergerät aussendet. Dann kann selbiges diese Anforderungssignale nicht umsetzen, sondern muss erst selbst noch eine Anfrage an das Wegfahrsperrensteuergerät senden und in Antwort darauf ein Anfragesignal erhalten haben, bevor das Umsetzen beginnen kann. Dies ist nachteilig, weil insgesamt zuviel Zeit verstreicht, bis der Momentenwunsch eines Fahrzeugführers umgesetzt ist. Gleiches gilt, wenn eine Drehmomentanforderung von einem Steuergerät abgegeben wird, z. B. einem Abstandsregelungssystem zur Regelung des Abstands des Fahrzeugs zu einem vorausfahrenden Fahrzeug bei Selbststeuerung des Fahrzeugs.

Es ist Aufgabe wird der Erfindung, für eine mögliche schnelle Umsetzung einer Drehmomentanforderung in einem Kraftfahrzeug zu sorgen, das über mehrere Antriebe verfügt, insbesondere sowohl über eine Verbrennungskraftmaschine als auch eine elektrische Maschine.

Die Aufgabe einerseits durch ein Verfahren gemäß Patentanspruch 1 und andererseits durch ein Kraftfahrzeug mit den Merkmalen gemäß Patentanspruch 4 gelöst.

Erfindungsgemäß teilt somit das Führungssteuergerät bei Absenden einer Anfrage an das Wegfahrsperrensteuergerät selbiges Absenden über ein Signal dem zumindest einen vorbestimmten Antriebssteuergerät mit, damit dieses dazu gebracht wird, ebenfalls eine Anfrage an das Wegfahrsperrensteuergerät zu senden. Es wird dadurch die Zeit eingespart, die für das Absenden der Anfrage, das Überprüfen der Situation durch das Wegfahrsperrensteuergerät, das Rücksenden des Freigabesignals und schließlich das Absenden des Anforderungssignals an das vorbestimmte Antriebssteuergerät sonst verstreichen würde. Stattdessen reagiert das vorbestimmte Antriebssteuergerät so schnell, wie es das mitteilende Signal erhält und sendet ebenfalls eine Anfrage. Dies bedeutet, dass nach Erhalt des Freigabesignals durch das Führungssteuergerät quasi unmittelbar auch schon das zumindest eine vorbestimmte Antriebssteuergerät ein solches Freigabesignal erhalten hat, sodass das Anforderungssignal unmittelbar oder nahezu unmittelbar umgesetzt werden kann. Dies bedeutet, dass die Drehmomentenanforderung schneller umgesetzt wird als dies bei bisherigen Konzepten der Fall war.

Bevorzugt ist das Führungssteuergerät selbst ein Antriebssteuergerät, insbesondere für eine Verbrennungskraftmaschine, und das vorbestimmte Abtriebssteuergerät, das die Mitteilung erhält, ist dann ein anderes Antriebssteuergerät, insbesondere ein solches für eine elektrische Maschine. Es hat sich erwiesen, dass die Funktionalität der Führung besonders einfach in ein Antriebssteuergerät integrierbar ist.

Es kann in dem Kraftfahrzeug auch ein Getriebesteuergerät zum Abgeben von Steuersignalen an ein Getriebe bereitgestellt sein, und auch diesem Getriebesteuergerät kann das Führungssteuergerät das Absenden einer Anfrage mitteilen, damit auch dieses Getriebesteuergerät frühzeitig eine Anfrage an das Wegfahrsperrensteuergerät sendet.

Das erfindungsgemäße Kraftfahrzeug ist dadurch gekennzeichnet, dass das Führungssteuergerät dazu ausgelegt ist, ein Absenden eines Anfragesignals an das Wegfahrsperrensteuergerät allen von ihm verschiedenen Antriebssteuergeräten über ein Signal mitzuteilen, wobei es bevorzugt das eine der Antriebssteuergeräte ist, und wobei zusätzlich bevorzugt ein Getriebesteuergerät vorhanden ist, dem das Führungssteuergerät ebenfalls das Absenden eines Anfragesignals mitteilt. Durch das erfindungsgemäße Kraftfahrzeug wird das erfindungsgemäße Verfahren umgesetzt, sodass die oben zum Verfahren beschriebenen Vorteile auch für das erfindungsgemäße Kraftfahrzeug gelten.

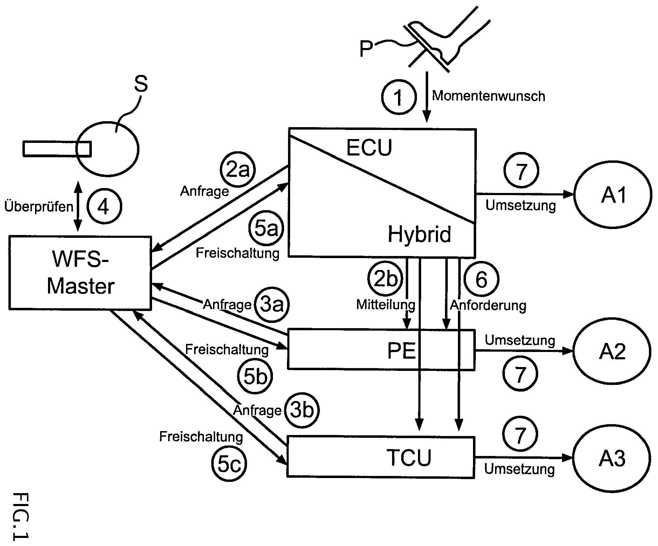

Nachfolgend wird eine bevorzugte Ausführungsform der Erfindung unter Bezug auf die Zeichnung beschrieben, in der die einzige Figur ein schematisches Schaubild der einzelnen Baugruppen eines Kraftfahrzeugs ist, zu denen der Signalfluss anhand der in der Zeichnung gezeigten Pfeile nachfolgend erläutert wird.

Das erfindungsgemäße Verfahren beginnt damit, dass ein Fahrzeugführer ein Fahrpedal P betätigt, wodurch er einen "Momentenwunsch" mitteilt, also eine Bedieneingabe macht, durch die dafür gesorgt werden soll, dass die Antriebe des Kraftfahrzeugs überhaupt ein Drehmoment aufbringen oder ein höheres Drehmoment aufbringen als zuvor.

Ein elektronisches Steuergerät (engine control unit, ECU) für eine Verbrennungskraftmaschine des Kraftfahrzeugs empfängt diesen Momentenwunsch.

Das Kraftfahrzeug soll vorliegend zusätzlich über eine elektrische Maschine verfügen, zu der es ein eigenes Antriebssteuergerät gibt ("PE" für "power electric"). Es gibt ferner ein drittes Steuergerät, das für die Ansteuerung eines Getriebes vorgesehen ist ("TCU").

Das Motorsteuergerät ECU wirkt auf einen oder mehrere Aktoren A1 ein, die zur Verbrennungskraftmaschine gehören. Das Antriebssteuergerät PE wirkt auf einen oder mehrere Aktoren A2 ein, die zur elektrischen Maschine gehören. Das Getriebesteuergerät TCU wirkt auf einen oder mehrere Aktoren A3 ein, die zu dem Getriebe gehören.

Das Motorsteuergerät ECU hat gleichzeitig die Aufgabe, ein Drehmoment gemäß dem Momentenwunsch auf die beiden Antriebe zu verteilen. Je nach Situation kann es sein, dass das Motorsteuergerät das Drehmoment von der Verbrennungskraftmaschine aufbringen lässt, oder es kann sein, dass es dieses von der elektrischen Maschine aufbringen lässt; schließlich kann das Drehmoment auch auf beide Antriebe verteilt werden. Diese Funktionalität als Führungssteuergerät ist in der Zeichnung durch die Bezeichnung "Hybrid" angegeben.

Als Führungssteuergerät überprüft das Motorsteuergerät ECU als nächstes, ob der Momentenwunsch überhaupt umgesetzt werden darf. Es kann nämlich sein, dass andere Bedingungen, die neben dem Betätigen des Fahrpedals P erfüllt sein müssen, nicht erfüllt sind. Insbesondere kann eine Wegfahrsperre gegeben sein. Das Motorsteuergerät ECU sendet somit eine Anfrage an ein Wegfahrsperrsteuergerät, in der Zeichnung als "WFS-Master" bezeichnet, wobei "WFS" für "Wegfahrsperre" steht. Gleichzeitig mit dem Absenden der Anfrage sendet das Motorsteuergerät ECU an die beiden anderen Steuergeräte ECU und TCU die Mitteilung, dass es eine solche Anfrage an WFS-Master gesandt hat. Diese Mitteilung wird durch ein bestimmtes Bit übermittelt. Dadurch werden die Steuergeräte PE und TCU dazu gebracht, gleichermaßen eine Anfrage an den WFS-Master zu senden, siehe die Schritte 3a und 3b. Nach Erhalt einer solchen Anfrage und insbesondere aller Anfragen überprüft der WFS-Master, ob eine vorbestimmte Bedingung gegeben ist, in der ein Fahren des Kraftfahrzeugs erwünscht ist. Insbesondere wird bezüglich eines Schlüssels S das Gegebensein einer bestimmten Bedingung überprüft, z. B. ob der Schlüssel S in ein (nicht gezeigtes) Schloss eingesteckt ist und ungedreht ist in die sog. "Klemme 15"-Stellung. Bei einem "keyless-go-System" kann das Vorhandensein eines Transponders mit einer bestimmten Kennung in der Nähe einer Erfassungseinrichtung für einen solchen überprüft werden etc. Der WFS-Master gibt dann eine Freischaltung oder Freigabe an die drei Steuergeräte ECU, PE und TCU, mehr oder weniger gleichzeitig (Schritte 5a, 5b, 5c).

Das Motorsteuergerät ECU in seiner Funktionalität als Führungssteuergerät "Hybrid" sendet dann aufgrund des Momentenwunsches Anforderungen an die anderen Steuergeräte PE und TCU, Schritt 6, wobei im nächsten Schritt eine Umsetzung erfolgt, Schritt 7: die Aktoren A1, A2, A3 werden angesteuert; gegebenenfalls erfolgt die Umsetzung lediglich bezüglich eines Teils der Aktoren durch einen Teil der Steuergeräte.

Damit das erste Steuergerät mit der Umsetzung gemäß Schritt 7 beginnen kann, muss die Bedingung erfüllt sein, dass für alle drei Steuergeräte gleichzeitig die Freischaltung vorliegt. Das Abgeben der Mitteilung gemäß Schritt 2b durch das Führungssteuergerät an die beiden anderen Steuergeräte soll bewirken, dass eine solche Freischaltung ausreichend schnell gegeben ist. Die Bedingung, dass bei allen Geräten eine Freischaltung gegeben sein soll, ist deswegen sinnvoll, weil beim späteren Betrieb des Kraftfahrzeugs sonst nicht kurzfristig durch das Führungssteuergerät "Hybrid" in vorbestimmten Situationen relativ schnell ein Wechsel betreffend Befehle und Anforderungen erfolgen könnte.

Vorliegend soll vorgesehen sein, dass die Freischaltung nach einiger Zeit verfällt. Damit dies bezüglich der Verbrennungskraftmaschine aber nicht dann eintritt, wenn das Kraftfahrzeug alleine mit der elektrischen Maschine betrieben wird, wird die Verbrennungskraftmaschine in vorbestimmten Zeitabständen aktiviert, die kleiner sind als die Zeitdauer, nach der die Freischaltung versagen würde.

Gemäß der vorliegenden Zeichnung und der zugehörigen Erläuterung ist das Motorsteuergerät ECU gleichzeitig Führungssteuergerät "Hybrid". Diese Funktionalität könnte jedoch genauso auch in das Steuergerät PE integriert sein, in das Steuergerät TCU integriert sein, oder gar durch ein gesondertes viertes Steuergerät (neben dem WFS-Master) bereitgestellt sein.

## Patentansprüche

1. Verfahren zum Betreiben von Antriebssteuergeräten (ECU, PE) in einem Kraftfahrzeug, die jeweils Steuersignale an Antriebe des Kraftfahrzeugs abgeben, wobei ein Steuergerät (ECU) als Führungssteuergerät (Hybrid) Vorgaben betreffend ein von den Antrieben gemeinsam aufzubringendes Drehmoment empfängt und Drehmoment den einzelnen Antrieben zuteilt und entsprechende Anforderungssignale an zumindest ein Antriebssteuergerät (PE) sendet, wobei das Führungssteuergerät (Hybrid) nur Anforderungssignale abgibt und zumindest ein vorbestimmtes Antriebssteuergerät (PE) nur Steuersignale abgibt, wenn ihnen nach einer jeweiligen Anfrage von ihnen ein Wegfahrsperrensteuergerät (WFS-Master) ein Freigabesignal übersandt hat,
**dadurch gekennzeichnet, dass**
das Führungssteuergerät (Hybrid) bei Absenden einer Anfrage an das Wegfahrsperrensteuergerät (WFS-Master) dieses Absenden über ein Signal an das zumindest eine vorbestimmte Antriebssteuergerät (PE) mitteilt, damit dieses ebenfalls eine Anfrage an das Wegfahrsperrensteuergerät sendet.

2. Verfahren nach Anspruch 1,
**dadurch gekennzeichnet, dass**
das Führungssteuergerät (Hybrid) selbst ein Antriebssteuergerät (ECU) ist, insbesondere für eine Verbrennungskraftmaschine.

3. Verfahren nach Anspruch 1 oder 2, bei dem in dem Kraftfahrzeug auch ein Getriebesteuergerät (TCU) zum Abgeben von Steuersignalen an ein Getriebe bereitgestellt ist,
**dadurch gekennzeichnet, dass**
das Führungssteuergerät (Hybrid) auch dem Getriebesteuergerät (TCU) das Absenden einer Anfrage mitteilt, damit auch dieses ebenfalls eine Anfrage an das Wegfahrsperrensteuergerät (WFS-Master) sendet.

4. Kraftfahrzeug mit einer Verbrennungskraftmaschine und einem zugehörigen ersten Antriebssteuergerät (ECU) zum Senden von Steuersignalen an die Verbrennungskraftmaschine, sowie mit einem elektrischen Antrieb und einem zugehörigen zweiten Antriebssteuergerät (PE) zum Senden von Steuersignalen an den elektrischen Antrieb, wobei ein Führungssteuergerät ausgelegt ist, Drehmomentanforderungen den einzelnen Antrieben zuzuteilen und dies an alle von ihm verschiedenen Antriebssteuergeräte über Anforderungssignale mitzuteilen, wenn auf ein Anfragesignal ein Wegfahrsperrensteuergerät des Kraftfahrzeugs ein vorbestimmtes Antwortsignal erhalten wurde,
**dadurch gekennzeichnet, dass**
das Führungssteuergerät (Hybrid) dazu ausgelegt ist, ein Absenden eines Anfragesignals an das Wegfahrsperrensteuergerät allen von ihm verschiedenen Antriebssteuergeräten (PE) über ein Signal mitzuteilen.

5. Kraftfahrzeug nach Anspruch 4, wobei das Führungssteuergerät (Hybrid) das erste Antriebssteuergerät (ECU) ist.

6. Kraftfahrzeug nach Anspruch 4 oder 5, mit einem Getriebe und einem zugehörigen Getriebesteuergerät, das entweder Führungssteuergerät ist, oder wobei das Führungssteuergerät ausgelegt ist, dem Getriebesteuergerät ebenfalls Anforderungssignale und ein eine Anfrage mitteilendes Signal zu senden.

## Claims

1. Method for operating drive control units (ECU, PE) in a motor vehicle, which each issue control signals to the drives of the motor vehicle, wherein one control unit (ECU), as a leading control unit (hybrid), receives input concerning a torque to be mutually generated by the drives and torque to be assigned to the individual drives, and sends corresponding request signals to at least one drive control unit (PE), wherein the leading control unit (hybrid) only emits request signals and at least one predetermined drive control unit (PE) only emits control signals, if a release signal has been transmitted to it by an engine immobiliser control unit (EI master) following a respective query,
**characterised in that**
on sending a query to the engine immobiliser control unit (EI master), the leading control unit (hybrid) informs the at least one predetermined drive control unit (PE) of this sending via a signal, so that same likewise sends a query to the engine immobiliser control unit.

2. Method according to claim 1,
**characterised in that**
the leading control unit (hybrid) is itself a drive control unit (ECU), in particular for an internal combustion engine.

3. Method according to claim 1 or 2, in which a transmission control unit (TCU) is also available in the vehicle for emitting control signals to a transmission,
**characterised in that**
the leading control unit (hybrid) also informs the transmission control unit (TCU) of the sending of a query, so that same likewise sends a query to the engine immobiliser control unit (EI master).

4. Motor vehicle comprising an internal combustion engine and an associated first drive control unit (ECU) for sending control signals to the internal combustion engine, and comprising an electric drive and an associated second drive control unit (PE) for sending control signals to the electric drive, wherein a leading control unit is designed to assign torque requirements to the individual drives and to inform same to all of the different drive control units thereof via request signals if, on a query signal, an engine immobiliser control unit of the motor vehicle receives a predetermined response signal,
**characterised in that**
the leading control unit (hybrid) is configured such that all of the different drive control units (PE) thereof are informed via a signal of a sending of a query signal to the engine immobiliser control unit.

5. Motor vehicle according to claim 4, wherein the leading control unit (hybrid) is the first drive control unit (ECU).

6. Motor vehicle according to claim 4 or 5, comprising a transmission and an associated transmission control unit, which is either the leading control unit, or wherein the leading control unit is designed to also send the transmission control unit request signals and a signal informing of a query.

## Revendications

1. Procédé de fonctionnement d'appareils de commande de propulsion (ECU, PE) dans un véhicule automobile, lesquels appareils fournissent à chaque fois des signaux de commande à des propulsions du véhicule automobile, un appareil de commande (ECU) recevant en tant qu'appareil de commande pilote (Hybrid) des prescriptions qui concernent un couple à appliquer conjointement par les propulsions, répartissant des couples sur les différentes propulsions et envoyant des signaux de sollicitation correspondants à au moins un appareil de commande de propulsion (PE), l'appareil de commande pilote (Hybrid) ne fournissant des signaux de sollicitation et au moins un appareil de commande de propulsion (PE) prédéterminé ne fournissant des signaux de commande que si, après une demande respective de leur part, un appareil de commande d'antidémarrage (WFS-Master) leur a envoyé un signal d'autorisation,
**caractérisé en ce que**, lors de l'envoi d'une demande à l'appareil de commande d'antidémarrage (WFS-Master), l'appareil de commande pilote (Hybrid) transmet cet envoi par l'intermédiaire d'un signal à l'au moins un appareil de commande de propulsion (PE) prédéterminé pour que celui-ci envoie également une demande à l'appareil de commande d'antidémarrage.

2. Procédé selon la revendication 1, **caractérisé en ce que** l'appareil de commande pilote (Hybrid) est lui-même un appareil de commande de propulsion (ECU), notamment pour un moteur à combustion interne.

3. Procédé selon la revendication 1 ou 2, selon lequel un appareil de commande de boîte de vitesses (TCU) est aussi installé dans le véhicule automobile pour fournir des signaux de commande à une boîte de vitesses, **caractérisé en ce que** l'appareil de commande pilote (Hybrid) informe aussi de l'envoi d'une demande l'appareil de commande de boîte de vitesses (TCU) pour que celui-ci envoie également une demande à l'appareil de commande d'antidémarrage (WFS-Master).

4. Véhicule automobile avec un moteur à combustion interne et avec un premier appareil de commande de propulsion (ECU) associé pour l'envoi de signaux de commande au moteur à combustion interne, ainsi qu'avec une propulsion électrique et avec un deuxième appareil de commande de propulsion (PE) associé pour l'envoi de signaux de commande au moteur électrique, un appareil de commande pilote étant conçu pour répartir des sollicitations de couple sur les différentes propulsions et pour en informer tous les appareils de commande de propulsion différents de lui-même par l'intermédiaire de signaux de sollicitation lorsque, en réponse à un signal de demande, un signal de réponse prédéterminé a été obtenu d'un appareil de commande d'antidémarrage du véhicule automobile,
**caractérisé en ce que** l'appareil de commande pilote (Hybrid) est conçu pour informer d'un envoi d'un signal de demande à l'appareil de commande d'antidémarrage tous les appareils de commande de propulsion (PE) différents de lui-même par l'intermédiaire d'un signal.

5. Véhicule automobile selon la revendication 4, selon lequel l'appareil de commande pilote (Hybrid) est le premier appareil de commande de propulsion (ECU).

6. Véhicule automobile selon la revendication 4 ou 5, avec une boîte de vitesses et avec un appareil de commande de boîte de vitesses associé qui est l'appareil de commande pilote, ou l'appareil de commande pilote étant conçu pour envoyer également à l'appareil de commande de boîte de vitesses des signaux de sollicitation et un signal informant d'une demande.
